# EUROPEAN PATENT SPECIFICATION

(11) **EP 3 848 605 B1**
(45) Date of publication and mention of the grant of the patent: **28.02.2024**
(21) Application number: 20820039.4
(22) Date of filing: 30.04.2020
(51) Int. Cl.: F16D 65/58, F16D 65/70

(54) **ROTATION ANGLE CONTROL DEVICE, AUTOMATIC CLEARANCE ADJUSTING ARM, AND VEHICLE BRAKE**
DREHWINKELSTEUERVORRICHTUNG, AUTOMATISCHER SPIELEINSTELLARM UND FAHRZEUGBREMSE
DISPOSITIF DE COMMANDE D'ANGLE DE ROTATION, BRAS DE RÉGLAGE AUTOMATIQUE DE JEU, ET FREIN DE VÉHICULE

(30) Priority: 04.11.2019 CN 201911064001
(43) Date of publication of application: 14.07.2021
(73) Proprietor: BPW (MEIZHOU) AXLE CO., LTD, Meizhou, Guangdong 514743 (CN)
(72) Inventor: YE, Tianzeng, Meizhou Guangdong 514743 (CN); YE, Jiada, Meizhou Guangdong 514743 (CN); LIAO, Zirun, Meizhou Guangdong 514743 (CN); CAI, Yongjie, Meizhou Guangdong 514743 (CN)
(74) Representative: Kohler Schmid Möbus Patentanwälte
(86) International application number: PCT/CN2020/088459
(87) International publication number: WO 2021/088340

(56) References cited:
- CN-A- 109 372 917
- CN-A- 109 372 917
- CN-A- 110 701 223
- CN-U- 202 746 467
- CN-U- 208 669 906
- CN-Y- 2 474 803
- CN-Y- 2 474 803
- US-A1- 2019 301 553
- US-A1- 2019 301 553
- US-A1- 2019 345 998

## Description

### CROSS-REFERENCE TO RELATED APPLICATIONS

The present invention is based on and claims priority to China Patent Application No. 201911064001.1 filed on November 4, 2019,

### TECHNICAL FIELD

The present invention relates to the technical field of automobile brakes, in particular to a rotation angle control device, an automatic clearance adjuster and an automobile brake.

### BACKGROUND

The automatic clearance adjuster of the automobile brake realizes the automatic adjustment function of a brake clearance by controlling a rotation angle of the adjuster. When the rotation angle of the adjuster is greater than a set value, its automatic adjustment function may be triggered. In the related art, the rotation angle control device is implemented by unidirectional ratchet teeth meshing with each other.

There have been several patents issued that cover variations of the rotation angle control device, the automatic clearance adjuster and the automobile brake. For example, Patent No. CN109372917A discloses an automatic gap adjusting arm of an automobile brake, comprising a casing, and the casing is provided with a first through hole and a second through hole that are communicated in the axial direction, A turbine is installed in the first through hole, a first worm matching the turbine is installed in the second through hole, and the first worm is installed in the second through hole. One end of the worm is provided with a coil spring, and the other end is provided with a clutch gear; one end of the first through hole is provided with a control disk assembly, and the control disk assembly includes a toothed a ring; the casing is further provided with a third through hole communicating with the first through hole and the second through hole. The axial direction of the hole and the first through hole are parallel to each other; wherein a rotation angle control device is installed in the third through hole, and the rotation angle control device It comprises a mandrel, and a transmission gear, a shifting block, a one-way clutch assembly and a second worm sleeved on the mandrel in sequence. The transmission gear meshes with the ring gear, the second worm meshes with the clutch gear; the transmission gear is provided with an axially extending slot, the dial block has an insert block which can be axially inserted into the slot and can rotate relative to its radial direction, and the radial width of the slot is larger than that of the slot. The radial width of the block is such that a rotation gap α is formed between the slot and the insert block; when the transmission gear rotates by α ° , the transmission gear Drive the dial block to rotate synchronously; when the dial block and the second worm both rotate counterclockwise, the dial block and the second worm are opposite to each other Rotation; when both the shifting block and the second worm rotate clockwise, the shifting block and the second worm are in a locked state without relative rotation. There is no rotation angle of the adjustment arm greater than the set value α in the prior art, but It is not enough to drive the one-way ratchet tooth to mesh to the next tooth, and can only be compensated slowly by other mechanisms. It can be quickly adjusted to the set value α angle to avoid the lag problem of the automatic adjustment function of the adjusting arm and ensure driving safety; and accessories Fewer, simple processing and manufacturing, low manufacturing cost.

Likewise, Patent No. CN2474803Y discloses an automatic adjustment device for braking clearance includes a casing. There is a one-way clutch consisting of a clutch gear, a clutch sleeve, a clutch spring and a stop spring that are sleeved on the worm shaft. The stop spring is housed in the clutch spring, and the clutch spring is housed in the annular wall of the clutch gear and the clutch sleeve. Along the axial direction of the worm shaft, the clutch sleeve is matched with the worm shaft through a conical surface and is located outside the clutch gear. A disc spring is provided on the worm shaft behind the worm. The worm is engaged with a worm gear mounted on the camshaft. The clutch gear is mounted on the worm shaft. The toothed part at one end of the rack meshes with the clutch gear, and the other end is provided with a finger claw part matched with the groove in the control ring.

### SUMMARY

According to one aspect of the present invention, a rotation angle control device is provided. The device includes: a mandrel; a transmission gear sleeved on the mandrel; a clutch sleeve sleeved on the mandrel and having a first axial counterbore in an end surface located on one side of the clutch sleeve away from the transmission gear; a second worm sleeved on the mandrel and having a second axial counterbore in an end surface located on one side of the second worm adjacent to the transmission gear; and an expansion spring sleeved over the mandrel and having an outer circular surface in interfere fit with inner hole surfaces of the first axial counterbore and the second axial counterbore, wherein the rotation angle control device further comprises: a spacer sleeve located between the expansion spring and the mandrel, wherein an outer circular diameter of the spacer sleeve is smaller than an inner hole size of the expansion spring presenting a retracting tendency, and an outer circular diameter of the spacer sleeve is also smaller than an inner hole size of the expansion spring after interference fitting.

In some embodiments, there is a preset rotation clearance between the transmission gear and the clutch sleeve in a circumferential direction, and the transmission gear is configured to drive the clutch sleeve to rotate along a first rotation direction when rotating to abut against the clutch sleeve relative to the second worm in the first rotation direction, such that the expansion spring is rotated to retract radially by a frictional force of the first axial counterbore of the clutch sleeve on an outer circular surface of the expansion spring, thereby causing slippage in rotation of the clutch sleeve relative to the expansion spring and the second worm; and drive the clutch sleeve to rotate along a second rotation direction when rotating to abut against the clutch sleeve relative to the second worm in the second rotation direction opposite to the first rotation direction, such that the expansion spring is rotated to expand radially by a frictional force of the first axial counterbore of the clutch sleeve against the outer circular surface of the expansion spring, thereby causing locking of the clutch sleeve relative to the expansion spring and the second worm to implement synchronous rotation.

In some embodiments, the transmission gear has a slot extending along an axial direction, an insert block which is axially insertable into the slot is provided at one end of the clutch sleeve away from the second worm; the insert block is rotatable relative to the slot, and a circumferential width of the insert block is smaller than a circumferential width of the slot to form the preset rotation clearance between the transmission gear and the clutch sleeve.

In some embodiments, the rotation angle control device further includes: a return torsion spring sleeved over the mandrel and located between the transmission gear and the clutch sleeve, wherein hooks at both ends of the return torsion spring are respectively buckled to a side wall of the slot and the insert block.

In some embodiments, the expansion spring is a right-handed expansion spring, where the first rotation direction is a counterclockwise direction, and the second rotation direction is a clockwise direction.

In some embodiments, an axial length of the spacer sleeve is smaller than a sum of depths of the first axial counterbore and the second axial counterbore.

In some embodiments, the rotation angle control device further includes: a shaft sleeve with one end abutting against an end of the second worm, and another end having a clearance elimination cavity; and a clearance elimination spring sleeved into the clearance elimination cavity, wherein the shaft sleeve is sleeved on the mandrel, and connected to the mandrel through a buckle.

In some embodiments, the sleeve further includes a fifth through hole communicating with the clearance elimination cavity, an inner wall of the fifth through hole has an elastic clamping block that extends into the clearance elimination cavity, one side of the elastic clamping block facing the fifth through hole has a guiding bevel, and the mandrel has a clamping slot engaging with the elastic clamping block.

According to one aspect of the present invention, an automatic clearance adjuster is provided. The automatic clearance adjuster includes: a housing having a first through hole and a second through hole that communicate with each other, and a mounting hole parallel to an axis of the first through hole and communicating with the first through hole and the second through hole; a worm gear disposed within the first through hole; a first worm disposed within the second through hole and engaging with the worm gear; a coil spring arranged at one end of the first worm; a clutch gear sleeved on another end of the first worm; a control disc assembly arranged at one end of the first through hole and including a gear ring; and the foregoing rotation angle control device, which is disposed within the mounting hole, wherein the transmission gear in the rotation angle control device engaging with the gear ring, and the second worm in the rotation angle control device engaging with the clutch gear.

In some embodiments, the control disc assembly further includes: a cover plate covering one side of the first through hole along an axial direction of the first through hole and shielding an opening of the mounting hole; and a control arm, wherein the control arm and the gear ring are respectively located on both sides of the cover plate, and fixedly connected to the gear ring, and wherein the control arm and the gear ring are rotatable synchronously relative to the cover plate.

In some embodiments, the mounting hole is a blind hole, the rotation angle control device further includes a shaft sleeve and a clearance elimination spring, and the shaft sleeve is sleeved on the second worm and connected to the mandrel through a buckle, wherein one end of the sleeve abuts against an end of the second worm, and another end of the sleeve has a clearance elimination cavity; and one end of the clearance elimination spring abuts into the clearance elimination cavity, and another end of the clearance elimination spring abuts into the installation hole.

In some embodiments, the automatic clearance adjuster further includes: an upper cover and a lower cover respectively arranged at both ends of the second through hole along an axial direction.

In some embodiments, the housing further includes a fourth through hole communicating with the second through hole, and the automatic clearance adjuster further includes an oil nozzle within the fourth through hole and a dustproof cover covered on the oil nozzle.

In one aspect of the present invention, an automobile brake is provided. The automobile brake includes the foregoing automatic clearance adjuster.

### BRIEF DESCRIPTION OF THE DRAWINGS

The accompanying drawings, which constitute part of this specification, illustrate exemplary embodiments of the present disclosure, and together with this specification, serve to explain the principles of the present disclosure.

The present invention may be more clearly understood from the following detailed description with reference to the accompanying drawings, in which:
Fig. 1 is a schematic structural exploded view according to an embodiment of the automatic clearance adjuster of the present disclosure;
Fig. 2 is a schematic structural exploded view according to an embodiment of the rotation angle control device of the present disclosure;
Fig. 3 is a partial cross-sectional view of a mounting structure according to an embodiment of the rotation angle control device of the present disclosure;
Fig. 4 is a schematic view of an external structure according to an embodiment of the rotation angle control device of the present invention;
Fig. 5 is a cross-sectional view of the A-A section in Fig. 4;
Fig. 6 is a cross-sectional view of the B-B section in Fig. 4;
Fig. 7 is a structural view of a control disc assembly according to an embodiment of the automatic clearance adjuster of the present invention;
Fig. 8 is a cross-sectional view of a shaft sleeve according to an embodiment of the rotation angle control device of the present invention.

It should be understood that the dimensions of the various parts shown in the accompanying drawings are not drawn according to the actual scale. In addition, the same or similar reference signs are used to denote the same or similar components.

### DETAILED DESCRIPTION

Various exemplary embodiments of the present invention will now be described in detail with reference to the accompanying drawings. The description of the exemplary embodiments is merely illustrative and is in no way intended as a limitation to the present invention, its application or use. The present invention may be implemented in many different forms, which are not limited to the embodiments described herein. These embodiments are provided to make the present invention thorough and complete, and fully convey the scope of the present invention to those skilled in the art. It should be noticed that: relative arrangement of components and steps, material composition, numerical expressions, and numerical values set forth in these embodiments, unless specifically stated otherwise, should be explained as merely illustrative, and not as a limitation.

The words "first", "second", and similar words used in the present disclosure do not denote any order, quantity or importance, but merely serve to distinguish different parts. Such similar words as "including" or "containing" mean that the element preceding the word encompasses the elements enumerated after the word, and does not exclude the possibility of encompassing other elements as well. The terms "up", "down", "left", "right", or the like are used only to represent a relative positional relationship, and the relative positional relationship may be changed correspondingly if the absolute position of the described object changes.

In the present invention, when it is described that a particular device is located between the first device and the second device, there may be an intermediate device between the particular device and the first device or the second device, and alternatively, there may be no intermediate device. When it is described that a particular device is connected to other devices, the particular device may be directly connected to said other devices without an intermediate device, and alternatively, may not be directly connected to said other devices but with an intermediate device.

All the terms (including technical and scientific terms) used in the present invention have the same meanings as understood by those skilled in the art of the present invention unless otherwise defined. It should also be understood that terms as defined in general dictionaries, unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

In some related technologies, due to factors such as the strength of the unidirectional ratchet, N teeth (N typically consists in 10-20 teeth) may be generally arranged in a circumferential direction as the adjustment transmission mechanism. When the rotation angle of the adjuster is greater than a set value, and the gear tooth meshing part of the unidirectional ratchet is driven to cross one tooth, rotation occurs during the brake return stroke and the adjusting mechanism is driven to compensate a clearance. When the rotation angle of the adjuster is greater than a set value, but not enough to drive the gear tooth meshing part of the unidirectional ratchet to mesh to the next tooth, it is only possible to compensate slowly by other mechanisms, which renders a lagging automatic adjustment action of the adjuster. For example, after an automobile is newly assembled with an automatic adjuster in which an initial clearance is adjusted, there is a need to step on the brake 30-60 feet to reach a set clearance. Moreover, after the adjuster is automatically adjusted, there is a great fluctuation in a brake clearance.

In view of this, the present invention provides a rotation angle control device, an automatic clearance adjuster and an automobile brake, which can realize an automatic adjustment action of the adjustment arm more rapidly and reliably.

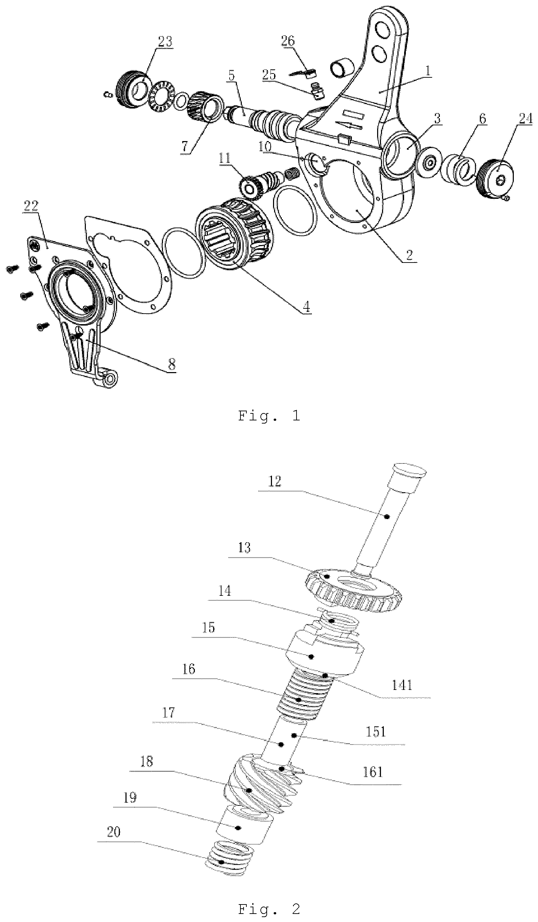

As shown in Fig. 1, it is a schematic structural exploded view according to an embodiment of the automatic clearance adjuster of the present disclosure. Referring to Fig. 1, in some embodiments, the automatic clearance adjuster includes: a housing 1, a worm gear 4, a first worm 5, a coil spring 6, a clutch gear 7, a control disc assembly and a rotation angle control device. The housing 1 has a first through hole 2 and a second through hole 3 communicating with each other, and a mounting hole 10 parallel to an axis of the first through hole 2 and communicating with the first through hole 2 and the second through hole 3.

The worm gear 4 is disposed within the first through hole 2, and the first worm 5 is disposed within the second through hole 3, and engaging with the worm gear 4. The coil spring 6 is arranged at one end of the first worm 5, and the clutch gear 7 is sleeved on another end of the first worm 5. The control disc assembly is arranged at one end of the first through hole 2, and includes a gear ring 9. The rotation angle control device is disposed within the mounting hole 10.

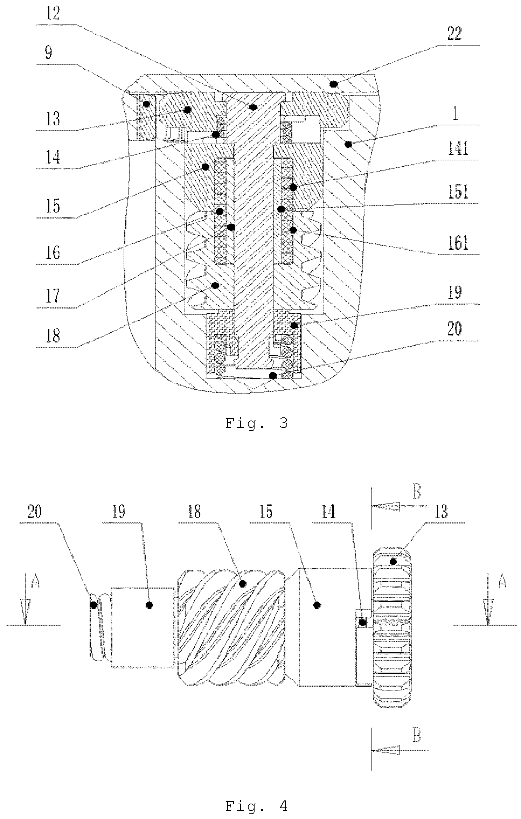

As shown in Fig. 2, it is a schematic structural exploded view according to an embodiment of the rotation angle control device of the present disclosure. Referring to Fig. 2 in conjunction with Figs. 3 to 6, in some embodiments, the rotation angle control device includes: a mandrel 12, a transmission gear 13, a clutch sleeve 15, a second worm 18 and an expansion spring 16. The transmission gear 13 is sleeved on the mandrel 12, and may mesh with the gear ring 9. The clutch sleeve 15 is sleeved on the mandrel 12, and includes a first axial counterbore 141 in an end surface located on one side of the clutch sleeve 15 away from the transmission gear 13. The second worm 18 is sleeved on the mandrel 12, and includes a second axial counterbore 161 in an end surface of the second worm 18 adjacent to the transmission gear 13. The expansion spring 16 is sleeved over the mandrel 12, and has an outer circular surface that is in interference fit with the inner hole surfaces of the first axial counterbore 141 and the second axial counterbore 161. The second worm 18 may mesh with the clutch gear 7.

In the present embodiment, the outer circular surfaces at both ends of the expansion spring 16 are respectively in interference fit with the inner hole surfaces of the first axial counterbore 141 of the clutch sleeve 15 and the second axial counterbore 161 of the second worm 18. In this way, the outer circular surface of the expansion spring 16 respectively forms friction pairs with the inner hole surfaces of the first axial counterbore 141 and the second axial counterbore 161, thereby forming a torsion spring clutch mechanism.

When the second worm 18 is fixed, and the clutch sleeve 15 has a tendency to rotate in a first rotation direction (for example, counterclockwise direction), the expansion spring 16 presents a tendency to deform towards a retracting direction under the action of a frictional force, so as to reduce a pressure of the friction pair, so that the clutch sleeve 15 can rotate relative to the second worm 18 against the frictional force. When the second worm 18 is fixed, and the clutch sleeve 15 has a tendency to rotate in a second rotation direction (for example, clockwise direction) opposite to the first rotation direction, the expansion spring 16 presents a tendency to expand outwards under the action of a frictional force, so as to increase a pressure of the friction pair as the rotation torque of the clutch sleeve 15 in a second rotation direction increases, so that the clutch sleeve 15 is limited by a frictional force to be in locked state with the expansion spring 16 and the second worm 18 without relative rotation. At this time, the expansion spring 16 acts as a unidirectional clutch during the entire process.

Compared with the related technology using a unidirectional ratchet, in the present embodiment, the expansion spring 16 is used as an unidirectional clutch, which can implement infinitely equal division in a circumferential direction, thereby achieving faster stepless adjustment and avoiding the problem of a lagging automatic adjustment function in the related technology, thus ensuring driving safety. Moreover, after the adjuster is automatically adjusted, there is a small fluctuation in a brake clearance.

Compared with the related technology using a wrap spring, the expansion spring of the embodiment presents an outward tension tendency when locked. With such an extension trend, it is possible to increase a frictional force between the expansion spring and the inner hole surfaces of the first axial counterbore and the second axial counterbore, thereby realizing a self-locking effect. In other words, by way of a frictional fit between the expansion spring and the axial counterbore, it is possible to achieve a greater locking force as compared to the wrap spring, so as to transmit a greater torque and avoid a slippage failure, thereby ensuring that the automatic adjustment function of the adjuster does not fail, and thus ensuring driving safety.

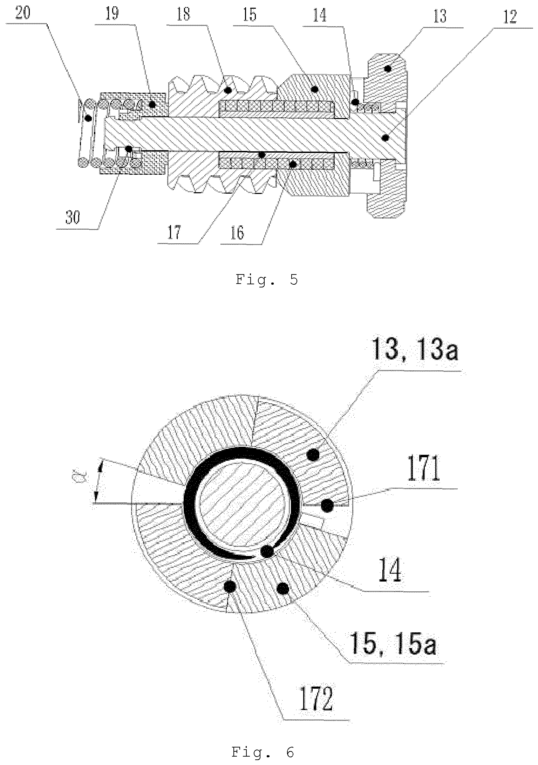

Referring to Fig. 6, in some embodiments, there is a preset rotation clearance α between the transmission gear 13 and the clutch sleeve 15 in a circumferential direction. When the transmission gear 13 can rotate relative to the second worm 18 to abut against the clutch sleeve 15 in a first rotation direction, the clutch sleeve 15 is driven to rotate along the first rotation direction such that the expansion spring 16 is rotated by a frictional force of the first axial counterbore 141 of the clutch sleeve 15 on the outer circular surface of the expansion spring 16 so as to retract radially, thereby causing slippage in rotation of the clutch sleeve 15 relative to the expansion spring 16 and the second worm 18.

When the transmission gear 13 rotates relative to the second worm 18 in a second rotation direction opposite to the first rotation direction to abut against the clutch sleeve 15, the transmission gear 13 can also drive the clutch sleeve 15 to rotate along the second rotation direction such that the expansion spring 16 is rotated by a frictional force of the first axial counterbore 141 of the clutch sleeve 15 on the outer circular surface of the expansion spring 16 so as to expand radially, thereby causing locking of the clutch sleeve 15 relative to the expansion spring 16 and the second worm 18 to implement synchronous rotation.

In some embodiments, the expansion spring 16 is a right-handed expansion spring, wherein the first rotation direction is a counterclockwise direction, and the second rotation direction is a clockwise direction. For example, when an automobile performs a braking action, the gear ring 9 drives the transmission gear 13 to rotate counterclockwise. After the transmission gear 13 rotates by a preset rotation clearance a, the transmission gear 13 will drive the clutch sleeve 15 to rotate counterclockwise, and the expansion spring 16 presents a tendency to deform towards a retraction direction under the action of a frictional force. The pressure of the friction pair formed by the inner hole surface of the clutch sleeve 15 and the outer circular surface of the expansion spring 16 decreases, and the frictional force decreases accordingly. The clutch sleeve 15 rotates relative to the second worm 18 against the frictional force, and the rotation angle is the rotation angle of the clutch sleeve 15 minus the preset rotation clearance α.

When the automobile is returned to original position after the braking action is completed, the gear ring 9 drives the transmission gear 13 to rotate clockwise. After the transmission gear 13 rotates by the preset rotation clearance a, the transmission gear 13 will drive the clutch sleeve 15 to rotate clockwise, and the expansion spring 16 presents a tendency to deform towards an expansion direction under the action of a frictional force. The clutch sleeve 15 which is limited by friction is locked with the expansion spring 16 and the second worm 18 to form an integral rigid structure. At this time, the clutch sleeve 15 drives the second worm 18 to rotate clockwise to eliminate an over-rotation angle exceeding the set value α°.

Referring to Figs. 2, 3 and 5, in some embodiments, the rotation angle control device further includes a spacer sleeve 17. The spacer sleeve 17 is located between the expansion spring 16 and the mandrel 12, and the outer circular diameter of the spacer sleeve 17 is smaller than the inner hole size of the expansion spring 16 presenting a retracting tendency. Correspondingly, the outer circular diameter of the spacer sleeve 17 is also smaller than the inner hole size of the expansion spring 16 after interference assembly.

The spacer sleeve 17 located between the expansion spring 16 and the mandrel 12 may maintain a coaxial relationship among the clutch sleeve 15, the expansion spring 16 and the second worm 18 when the clutch sleeve 15, the expansion spring 16 and the second worm 18 are locked and under stress, to produce the effect of limiting the expansion spring 16 and reduce the risk of misalignment between the clutch sleeve 15 and the second worm 18 caused by excessive tangential deformation of the expansion spring 16, thereby effectively improving the service life of the product.

In some embodiments, the axial length of the spacer sleeve 17 is smaller than the sum of the depths of the first axial counterbore 141 and the second axial counterbore 161, so as not to limit the axial positions between the clutch sleeve 15 and the second worm 18.

Referring to Figs. 5 and 6, in some embodiments, the transmission gear 13 includes a slot 13a extending along an axial direction, and an insert block 15a which is axially insertable into the slot 13a is provided at one end of the clutch sleeve 15 away from the second worm 18. The insert block 15a is rotatable relative to the slot 13a, and a circumferential width of the insert block 15a is smaller than a circumferential width of the slot 13a to form the preset rotation clearance between the transmission gear 13 and the clutch sleeve 15.

The numbers of the slot 13a of the transmission gear 13 and the insert block 15a of the clutch sleeve 15 may be one or more respectively. Alternatively, the numbers of the slot 13a and the insert block 15a are both two, and the matching structure including two slots 13a and two insert blocks 15a can achieve a greater bearing capacity between the transmission gear 13 and the clutch sleeve 15 and make a more reliable structure.

In Fig. 6, the slot 13a has a first side wall 171 and a second side wall 172. When the transmission gear 13 rotates by α° clockwise, the first side wall 171 abuts against the side wall of the insert block 15a of the clutch sleeve 15, and the transmission gear 13 drives the clutch sleeve 15 to rotate clockwise. Then, when the transmission gear 13 further rotates by α° counterclockwise, the second side wall 172 abuts against the side wall of the insert block 15a of the clutch sleeve 15, and the transmission gear 13 drives the clutch sleeve 15 to rotate counterclockwise.

Referring to Figs. 2 to 6, in some embodiments, the rotation angle control device further includes a return torsion spring 14. The return torsion spring 14 is sleeved over the mandrel 12 and located between the transmission gear 13 and the clutch sleeve 15. The hooks at both ends of the return torsion spring 14 are respectively buckled to the side wall of the slot 13a and the insert block 15a, so that the return torsion spring 14 can maintain the transmission gear 13 and the clutch sleeve 15 at set positions in a state where the transmission gear 13 and the clutch sleeve 15 do not receive an external force.

Referring to Figs. 3 to 5 and 8, in some embodiments, the rotation angle control device further includes a shaft sleeve 19 and a clearance elimination spring 20. One end of the shaft sleeve 19 abuts against the end of the second worm 18, and another end of the shaft sleeve 19 has a clearance elimination cavity 19a. The clearance elimination spring 20 is sleeved into the clearance elimination cavity 19a. The shaft sleeve 19 is sleeved on the mandrel 12, and connected to the mandrel 12 through a buckle.

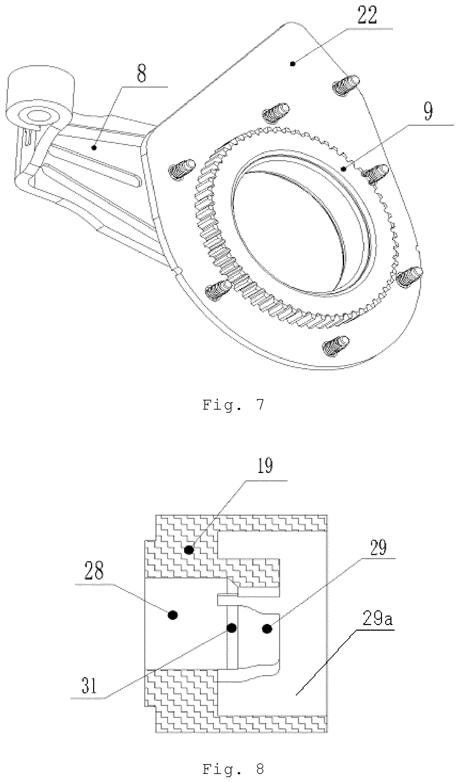

In Fig. 8, the shaft sleeve 19 further includes a fifth through hole 28 that communicating with the clearance elimination cavity 19a, and the inner wall of the fifth through hole 28 has an elastic clamping block 29 that extends into the clearance elimination cavity 19a. One side of the elastic clamping block 29 facing the fifth through hole 28 has a guiding bevel 31, and the mandrel 12 has a clamping slot 30 engaging with the elastic clamping block 29.

During the assembling, the front end of the mandrel 12 passes through the transmission gear 13, the return torsion spring 14, the clutch sleeve 15, the expansion spring 16, the spacer sleeve 17, the second worm 18 and the fifth through hole 28 successively to embed the elastic block 29 into the clamping slot 30 of the mandrel 12, so as to make the assembling simple and convenient. In order to make a more solid installation between the shaft sleeve 19 and the mandrel 12, the shaft sleeve 19 may have a plurality of elastic clamping blocks 29. The clamping slot 30 may be a circular clamping slot.

Referring to Figs. 1 and 7, in some embodiments, the control disc assembly in the automatic clearance adjuster may further include a cover plate 22 and a control arm 8. The cover plate 22 covers one side of the first through hole 2 along an axial direction of the first through hole 2 and shields an opening of the mounting hole 10. The mounting hole 10 may be a stepped hole, and the mounting hole 10 is shielded on a single side by the cover plate 22 to facilitate machining the mounting hole 10, reduce the production cost, and achieve the waterproof and dustproof effect.

The control arm 8 and the gear ring 9 are respectively located on both sides of the cover plate 22 and fixedly connected to the gear ring 9 (such as riveting or the like) . The control arm 8 and the gear ring 9 may rotate synchronously relative to the cover plate 22. One end of the clearance elimination spring 20 mentioned previously may abut into the clearance elimination cavity 19a and another end of the clearance elimination spring 20 mentioned previously may abut into the mounting hole 10.

Referring to Fig. 1, in some embodiments, the automatic clearance adjuster further includes: an upper cover 23 and a lower cover 24 respectively arranged at both ends of the second through hole 3 along an axial direction. The upper cover 23 and the lower cover 24 can produce the effect of sealing both ends of the second through hole 3. In addition, the housing 1 further includes a fourth through hole communicating with the second through hole 3, and the automatic clearance adjuster further includes an oil nozzle 25 located within the fourth through hole and a dustproof cover 26 covered on the oil nozzle 25. Lubricating oil or the like may be injected into the housing 1 through the oil nozzle 25 to reduce wear, improve the performance, and prolong the service life.

Various embodiments of the above-described automatic clearance adjuster may be applied to an automobile brake. Therefore, the present invention also provides an automobile brake including any of the foregoing automatic clearance adjuster.

Hereto, various embodiments of the present invention have been described in detail. Some details well known in the art are not described to avoid obscuring the concept of the present invention. According to the above description, those skilled in the art would fully know how to implement the technical solutions disclosed herein.

Although some specific embodiments of the present invention have been described in detail by way of examples, those skilled in the art should understand that the above examples are only for the purpose of illustration and are not intended to limit the scope of the present invention. It should be understood by those skilled in the art that modifications to the above embodiments and equivalently substitution of part of the technical features may be made without departing from the scope of the present invention. The scope of the present invention is defined by the appended claims.

## Claims

1. A rotation angle control device, comprising:
a mandrel (12);
a transmission gear (13) sleeved on the mandrel (12);
a clutch sleeve (15) sleeved on the mandrel (12) and having a first axial counterbore (141) in an end surface located on one side of the clutch sleeve (15) away from the transmission gear (13);
a second worm (18) sleeved on the mandrel (12); and
a spring (16) sleeved over the mandrel (12) and having a circular surface in interfere fit with surfaces,
**characterized by** further comprising:
a second axial counterbore (161) in an end surface located on one side of the second worm (18) adjacent to the transmission gear (13) ;
a spring (16) being realized as an expansion spring sleeved over the mandrel (12) and having an outer circular surface in interfere fit with inner hole surfaces of the first axial counterbore (141) and the second axial counterbore (161); and
a spacer sleeve (17) located between the expansion spring (16) and the mandrel (12), wherein an outer circular diameter of the spacer sleeve (17) is smaller than an inner hole size of the spring (16) presenting a retracting tendency, and an outer circular diameter of the spacer sleeve (17) is also smaller than an inner hole size of the expansion spring (16) after interference fitting.

2. The rotation angle control device according to claim 1, wherein there is a preset rotation clearance between the transmission gear (13) and the clutch sleeve (15) in a circumferential direction, and
the transmission gear (13) is configured to drive the clutch sleeve (15) to rotate along a first rotation direction when rotating to abut against the clutch sleeve (15) relative to the second worm (18) in the first rotation direction, such that the expansion spring (16) is rotated to retract radially by a frictional force of the first axial counterbore (141) of the clutch sleeve (15) against an outer circular surface of the expansion spring (16), thereby causing slippage in rotation of the clutch sleeve (15) relative to the expansion spring (16) and the second worm (18); and
drive the clutch sleeve (15) to rotate along a second rotation direction when rotating to abut against the clutch sleeve (15) relative to the second worm (18) in the second rotation direction opposite to the first rotation direction, such that the expansion spring (16) is rotated to expand radially by a frictional force of the first axial counterbore (141) of the clutch sleeve (15) against the outer circular surface of the expansion spring (16), thereby causing locking of the clutch sleeve (15) relative to the expansion spring (16) and the second worm (18) to implement synchronous rotation.

3. The rotation angle control device according to claim 2, wherein the transmission gear (13) has a slot (13a) extending along an axial direction, an insert block (15a) which is axially insertable into the slot (13a) is provided at one end of the clutch sleeve (15) away from the second worm (18), the insert block (15a) is rotatable relative to the slot (13a), and a circumferential width of the insert block (15a) is smaller than a circumferential width of the slot (13a) to form the preset rotation clearance between the transmission gear (13) and the clutch sleeve (15).

4. The rotation angle control device according to claim 3, further comprising:
a return torsion spring (14) sleeved over the mandrel (12) and located between the transmission gear (13) and the clutch sleeve (15), wherein hooks at both ends of the return torsion spring (14) are respectively buckled to a side wall of the slot (13a) and the insert block (15a).

5. The rotation angle control device according to claim 1, wherein the expansion spring (16) is a right-handed expansion spring, where the first rotation direction is a counterclockwise direction, and the second rotation direction is a clockwise direction.

6. The rotation angle control device according to claim 1, wherein an axial length of the spacer sleeve (17) is smaller than a sum of depths of the first axial counterbore (141) and the second axial counterbore (161).

7. The rotation angle control device according to claim 1, further comprising:
a shaft sleeve (19) with one end abutting against an end of the second worm (18), and another end having a clearance elimination cavity (19a); and
a clearance elimination spring (20) sleeved into the clearance elimination cavity (19a),
wherein the shaft sleeve (19) is sleeved on the mandrel (12), and connected to the mandrel (12) through a buckle.

8. The rotation angle control device according to claim 7, wherein the sleeve (19) further comprises a fifth through hole (28) communicating with the clearance elimination cavity (19a), an inner wall of the fifth through hole (28) has an elastic clamping block (29) that extends into the clearance elimination cavity (19a), one side of the elastic clamping block (29) facing the fifth through hole (28) has a guiding bevel (31), and the mandrel (12) has a clamping slot (30) engaging with the elastic clamping block (29) .

9. An automatic clearance adjuster, comprising:
a housing (1) having a first through hole (2) and a second through hole (3) that communicate with each other, and a mounting hole (10) parallel to an axis of the first through hole (2) and communicating with the first through hole ( 2) and the second through hole (3);
a worm gear (4) disposed within the first through hole (2);
a first worm (5) disposed within the second through hole (3) and engaging with the worm gear (4);
a coil spring (6) arranged at one end of the first worm (5);
a clutch gear (7) sleeved on another end of the first worm (5) ;
a control disc assembly arranged at one end of the first through hole (2) and comprising a gear ring (9); and
the rotation angle control device according to any one of claims 1-8, which is disposed within the mounting hole (10),
wherein the transmission gear (13) in the rotation angle control device engages with the gear ring (9), and the second worm (18) in the rotation angle control device engages with the clutch gear (7) .

10. The automatic clearance adjuster according to claim 9, wherein the control disc assembly further comprises:
a cover plate (22) covering one side of the first through hole (2) along an axial direction of the first through hole (2) and shielding an opening of the mounting hole (10); and
a control arm (8), wherein the control arm (8) and the gear ring (9) are respectively located on both sides of the cover plate (22), and fixedly connected to the gear ring (9), and
wherein the control arm (8) and the gear ring (9) are rotatable synchronously relative to the cover plate (22).

11. The automatic clearance adjuster according to claim 9, wherein the mounting hole (10) is a blind hole, the rotation angle control device further comprises a shaft sleeve (19) and a clearance elimination spring (20), and the shaft sleeve (19) is sleeved on the second worm (18) and connected to the mandrel (12) through a buckle, wherein one end of the sleeve (19) abuts against an end of the second worm (18), and another end of the sleeve (19) has a clearance elimination cavity (19a); and one end of the clearance elimination spring (20) abuts into the clearance elimination cavity (19a), and another end of the clearance elimination spring (20) abuts into the installation hole (10).

12. The automatic clearance adjuster according to claim 9, further comprising:
an upper cover (23) and a lower cover (24) respectively arranged at both ends of the second through hole (3) along an axial direction.

13. The automatic clearance adjuster according to claim 9, wherein the housing further comprises a fourth through hole communicating with the second through hole (3), and the automatic clearance adjuster further comprises an oil nozzle (25) within the fourth through hole and a dustproof cover (26) covered on the oil nozzle (25).

14. An automobile brake comprising the automatic clearance adjuster according to any one of claims 9-13.

## Patentansprüche

1. Eine Drehwinkelsteuervorrichtung, umfassend:
einen Dorn (12);
ein Getrieberad (13), das auf den Dorn (12) gestülpt ist;
eine Kupplungshülse (15), die auf den Dorn (12) gestülpt ist und eine erste axiale Senkbohrung (141) in einer Endfläche aufweist, die sich auf einer Seite der Kupplungshülse (15) von dem Getrieberad (13) weg befindet;
eine zweite Spiralschnecke (18), die auf den Dorn (12) gestülpt ist; und
eine Feder (16), die über den Dorn (12) gestülpt ist und eine kreisförmige Oberfläche aufweist, die in Eingriff mit Oberflächen steht,
**dadurch gekennzeichnet, dass** sie ferner umfasst:
eine zweite axiale Senkbohrung (161) in einer Endfläche, die sich auf einer Seite der zweiten Spiralschnecke (18) angrenzend an das Getrieberad (13) befindet;
eine Feder (16), die als eine Dehn-Feder ausgebildet ist, die über den Dorn (12) gestülpt ist und eine äußere kreisförmige Oberfläche aufweist, die mit inneren Bohrungsoberflächen der ersten axialen Senkbohrung (141) und der zweiten axialen Senkbohrung (161) als Presspassung in Eingriff steht;
und eine Abstandshalterhülse (17), die sich zwischen der Dehn-Feder (16) und dem Dorn (12) befindet, wobei ein Außendurchmesser der Abstandshalterhülse (17) kleiner als eine innere Lochgröße der Feder (16) ist, die eine Rückzugstendenz aufweist, und ein äußerer kreisförmiger Durchmesser der Abstandshalterhülse (17) auch kleiner als eine innere Lochgröße der Dehn-Feder (16) nach der Presspassung ist.

2. Die Drehwinkelsteuervorrichtung nach Anspruch 1, wobei es einen voreingestellten Rotationsspielraum zwischen dem Getrieberad (13) und der Kupplungshülse (15) in einer Umfangsrichtung gibt, und das Getrieberad (13) konfiguriert ist, um die Kupplungshülse (15) anzutreiben, um sich entlang einer ersten Drehrichtung zu drehen, wenn sie sich dreht, um in der ersten Drehrichtung an der Kupplungshülse (15) relativ zu der zweiten Spiralschnecke (18) anzuliegen, sodass die Dehn-Feder (16) gedreht wird, um sich durch eine Reibungskraft der ersten axialen Senkbohrung (141) der Kupplungshülse (15) gegen eine äußere kreisförmige Oberfläche der Dehn-Feder (16) radial zurückzuziehen, wodurch ein Schlupf bei der Drehung der Kupplungshülse (15) relativ zu der Dehn-Feder (16) und der zweiten Spiralschnecke (18) verursacht wird; und die Kupplungshülse (15) anzutreiben, um sich entlang einer zweiten Drehrichtung zu drehen, wenn sie sich dreht, um in der zweiten Drehrichtung entgegengesetzt zur ersten Drehrichtung an der Kupplungshülse (15) relativ zu der zweiten Spiralschnecke (18) anzuliegen, sodass die Dehn-Feder (16) gedreht wird, um sich radial durch eine Reibungskraft der ersten axialen Senkbohrung (141) der Kupplungshülse (15) gegen die äußere kreisförmige Oberfläche der Dehn-Feder (16) zu dehnen, wodurch eine Verriegelung der Kupplungshülse (15) relativ zu der Dehn-Feder (16) und der zweiten Spiralschnecke (18) bewirkt wird, um eine synchrone Drehung zu implementieren.

3. Die Drehwinkelsteuervorrichtung nach Anspruch 2, wobei das Getrieberad (13) einen Schlitz (13a) aufweist, der sich entlang einer axialen Richtung erstreckt, wobei an einem Ende der Kupplungshülse (15) ein Einsetzblock (15a), der axial in den Schlitz (13a) einführbar ist, von der zweiten Spiralschnecke (18) weg bereitgestellt ist, wobei der Einsetzblock (15a) relativ zu dem Schlitz (13a) drehbar ist, und eine Umfangsbreite des Einsetzblocks (15a) kleiner ist als eine Umfangsbreite des Schlitzes (13a), um den voreingestellten Rotationsspielraum zwischen dem Getrieberad (13) und der Kupplungshülse (15) zu bilden.

4. Die Drehwinkelsteuervorrichtung nach Anspruch 3, ferner umfassend:
eine Rückhol-Torsionsfeder (14), die über den Dorn (12) gestülpt ist und zwischen dem Getrieberad (13) und der Kupplungshülse (15) angeordnet ist, wobei Haken an beiden Enden der Rückhol-Torsionsfeder (14) jeweils zu einer Seitenwand des Schlitzes (13a) und des Einsetzblocks (15a) geknickt sind.

5. Die Drehwinkelsteuervorrichtung nach Anspruch 1, wobei die Dehn-Feder (16) eine rechtsgewundene Dehn-Feder ist, wobei die erste Drehrichtung eine Richtung gegen den Uhrzeigersinn ist, und die zweite Drehrichtung eine Richtung im Uhrzeigersinn ist.

6. Die Drehwinkelsteuervorrichtung nach Anspruch 1, wobei eine axiale Länge der Abstandshalterhülse (17) kleiner ist als eine Summe von Tiefen der ersten axialen Senkbohrung (141) und der zweiten axialen Senkbohrung (161).

7. Die Drehwinkelsteuervorrichtung nach Anspruch 1, ferner umfassend:
eine Wellenhülse (19) mit einem Ende, das an einem Ende der zweiten Spiralschnecke (18) anliegt, und einem anderen Ende, das einen Hohlraum (19a) zum Ausgleich von Spiel aufweist; und
eine Spielausgleichsfeder (20), die in den Hohlraum (19a) zum Ausgleich von Spiel eingeführt ist,
wobei die Wellenhülse (19) auf den Dorn (12) gestülpt ist und durch einen Knick mit dem Dorn (12) verbunden ist.

8. Die Drehwinkelsteuervorrichtung nach Anspruch 7, wobei die Hülse (19) ferner ein fünftes Durchgangsloch (28) umfasst, das mit dem Hohlraum (19a) zum Ausgleich von Spiel verbunden ist, wobei eine Innenwand des fünften Durchgangslochs (28) einen elastischen Klemmblock (29) aufweist, der sich in den Hohlraum (19a) zum Ausgleich von Spiel erstreckt, wobei eine Seite des elastischen Klemmblocks (29), die dem fünften Durchgangsloch (28) zugewandt ist, eine Führungsschräge (31) aufweist und der Dorn (12) einen Klemmschlitz (30) aufweist, der in den elastischen Klemmblock (29) eingreift.

9. Eine automatische Vorrichtung zur Spielanpassung, umfassend:
ein Gehäuse (1), das ein erstes Durchgangsloch (2) und ein zweites Durchgangsloch (3), die miteinander verbunden sind, und ein Befestigungsloch (10) aufweist, das parallel zu einer Achse des ersten Durchgangslochs (2) liegt und mit dem ersten Durchgangsloch (2) und dem zweiten Durchgangsloch (3) verbunden ist;
ein Schneckengetriebe (4), das innerhalb des ersten Durchgangslochs (2) angeordnet ist;
eine erste Schnecke (5), die innerhalb des zweiten Durchgangslochs (3) angeordnet ist und mit dem Schneckengetriebe (4) in Eingriff steht;
eine Schraubenfeder (6), die an einem Ende der ersten Schnecke (5) angeordnet ist;
ein Kupplungszahnrad (7), das auf ein anderes Ende der ersten Schnecke (5) gestülpt ist;
eine Steuerscheibenanordnung, die an einem Ende des ersten Durchgangslochs (2) angeordnet ist und einen Zahnkranz (9) umfasst; und
die Drehwinkelsteuervorrichtung nach einem der Ansprüche 1-8, die innerhalb des Befestigungslochs (10) angeordnet ist,
wobei das Getrieberad (13) in der Drehwinkelsteuervorrichtung mit dem Zahnkranz (9) in Eingriff steht und die zweite Spiralschnecke (18) in der Drehwinkelsteuervorrichtung mit dem Kupplungszahnrad (7) in Eingriff steht.

10. Die automatische Vorrichtung zur Spielanpassung nach Anspruch 9, wobei die Steuerscheibenanordnung ferner umfasst:
eine Abdeckplatte (22), die eine Seite des ersten Durchgangslochs (2) entlang einer axialen Richtung des ersten Durchgangslochs (2) abdeckt und eine Öffnung des Befestigungslochs (10) abschirmt; und
einen Steuerarm (8), wobei sich der Steuerarm (8) und der Zahnkranz (9) jeweils auf beiden Seiten der Abdeckplatte (22) befinden und fest mit dem Zahnkranz (9) verbunden sind, und
wobei der Steuerarm (8) und der Zahnkranz (9) synchron relativ zu der Abdeckplatte (22) drehbar sind.

11. Die automatische Vorrichtung zur Spielanpassung nach Anspruch 9, wobei das Befestigungsloch (10) ein Sackloch ist, wobei die Drehwinkelsteuervorrichtung ferner eine Wellenhülse (19) und eine Spielausgleichsfeder (20) umfasst, und die Wellenhülse (19) auf die zweite Spiralschnecke (18) gestülpt und durch einen Knick mit dem Dorn (12) verbunden ist, wobei ein Ende der Hülse (19) an einem Ende der zweiten Spiralschnecke (18) anliegt und ein anderes Ende der Hülse (19) einen Hohlraum (19a) zum Ausgleich von Spiel aufweist; und ein Ende der Spielausgleichsfeder (20) in den Hohlraum (19a) zum Ausgleich von Spiel mündet, und ein anderes Ende der Spielausgleichsfeder (20) in das Installationsloch (10) mündet.

12. Die automatische Vorrichtung zur Spielanpassung nach Anspruch 9, ferner umfassend:
eine obere Abdeckung (23) und eine untere Abdeckung (24), die jeweils an beiden Enden des zweiten Durchgangslochs (3) entlang einer axialen Richtung angeordnet sind.

13. Die automatische Vorrichtung zur Spielanpassung nach Anspruch 9, wobei das Gehäuse ferner ein viertes Durchgangsloch umfasst, das mit dem zweiten Durchgangsloch (3) verbunden ist, und die Vorrichtung zur automatischen Spielanpassung ferner eine Öldüse (25) innerhalb des vierten Durchgangslochs und eine staubdichte Abdeckung (26) umfasst, die auf der Öldüse (25) abgedeckt ist.

14. Kraftfahrzeugbremse, umfassend die automatische Vorrichtung zur Spielanpassung nach einem der Ansprüche 9-13.

## Revendications

1. Dispositif de commande d'angle de rotation, comprenant :
un mandrin (12) ;
un engrenage de transmission (13) qui est emmanché sur le mandrin (12) ;
un manchon d'embrayage (15) qui est emmanché sur le mandrin (12) et qui comporte un premier contre-alésage axial (141) dans une surface d'extrémité qui est localisée sur un côté du manchon d'embrayage (15) à distance de l'engrenage de transmission (13) ;
une seconde vis sans fin (18) qui est emmanchée sur le mandrin (12) ; et
un ressort (16) qui est emmanché au-dessus du mandrin (12) et qui comporte une surface circulaire en ajustement avec serrage avec des surfaces ;
**caractérisé en ce qu'**il comprend en outre :
un second contre-alésage axial (161) dans une surface d'extrémité qui est localisée sur un côté de la seconde vis sans fin (18) en une position adjacente à l'engrenage de transmission (13) ;
un ressort (16) qui est réalisé en tant que ressort d'expansion, qui est emmanché au-dessus du mandrin (12) et qui comporte une surface circulaire externe en ajustement avec serrage avec des surfaces de trou(s) interne(s) du premier contre-alésage axial (141) et du second contre-alésage axial (161) ; et
un manchon à fonction d'espaceur (17) qui est localisé entre le ressort d'expansion (16) et le mandrin (12), dans lequel un diamètre circulaire externe du manchon à fonction d'espaceur (17) est plus petit qu'une dimension de trou interne du ressort (16) présentant une tendance à la rétraction, et un diamètre circulaire externe du manchon à fonction d'espaceur (17) est également plus petit qu'une dimension de trou interne du ressort d'expansion (16) après ajustement avec serrage.

2. Dispositif de commande d'angle de rotation selon la revendication 1, dans lequel il existe un jeu de rotation prédéfini entre l'engrenage de transmission (13) et le manchon d'embrayage (15) dans une direction circonférentielle ; et
l'engrenage de transmission (13) est configuré pour :
entraîner le manchon d'embrayage (15) en rotation suivant une première direction de rotation lors de la rotation pour une venue en butée contre le manchon d'embrayage (15) par rapport à la seconde vis sans fin (18) dans la première direction de rotation, de telle sorte que le ressort d'expansion (16) soit entraîné en rotation pour être rétracté radialement par une force de friction du premier contre-alésage axial (141) du manchon d'embrayage (15) contre une surface circulaire externe du ressort d'expansion (16), ce qui génère ainsi un glissement en rotation du manchon d'embrayage (15) par rapport au ressort d'expansion (16) et à la seconde vis sans fin (18) ; et pour
entraîner le manchon d'embrayage (15) en rotation suivant une seconde direction de rotation lors de la rotation pour une venue en butée contre le manchon d'embrayage (15) par rapport à la seconde vis sans fin (18) dans la seconde direction de rotation qui est opposée à la première direction de rotation, de telle sorte que le ressort d'expansion (16) soit entraîné en rotation pour être étendu radialement par une force de friction du premier contre-alésage axial (141) du manchon d'embrayage (15) contre la surface circulaire externe du ressort d'expansion (16), ce qui génère ainsi le blocage du manchon d'embrayage (15) par rapport au ressort d'expansion (16) et à la seconde vis sans fin (18) pour mettre en oeuvre une rotation synchrone.

3. Dispositif de commande d'angle de rotation selon la revendication 2, dans lequel l'engrenage de transmission (13) comporte une fente (13a) qui est étendue suivant une direction axiale, et un bloc d'insert (15a) qui peut être inséré axialement à l'intérieur de la fente (13a) est prévu au niveau d'une extrémité du manchon d'embrayage (15) à distance de la seconde vis sans fin (18), le bloc d'insert (15a) peut être entraîné en rotation par rapport à la fente (13a), et une largeur circonférentielle du bloc d'insert (15a) est plus petite qu'une largeur circonférentielle de la fente (13a) pour former le jeu de rotation prédéfini entre l'engrenage de transmission (13) et le manchon d'embrayage (15).

4. Dispositif de commande d'angle de rotation selon la revendication 3, comprenant en outre :
un ressort de torsion de rappel (14) qui est emmanché au-dessus du mandrin (12) et qui est localisé entre l'engrenage de transmission (13) et le manchon d'embrayage (15), dans lequel des crochets au niveau des deux extrémités du ressort de torsion de rappel (14) sont respectivement bouclés et en rapport avec une paroi latérale de la fente (13a) et une paroi latérale du bloc d'insert (15a).

5. Dispositif de commande d'angle de rotation selon la revendication 1, dans lequel le ressort d'expansion (16) est un ressort d'expansion dextrogyre, dans lequel la première direction de rotation est une direction dans le sens inverse des aiguilles d'une montre et la seconde direction de rotation est une direction dans le sens des aiguilles d'une montre.

6. Dispositif de commande d'angle de rotation selon la revendication 1, dans lequel une longueur axiale du manchon à fonction d'espaceur (17) est plus petite qu'une somme de profondeurs du premier contre-alésage axial (141) et du second contre-alésage axial (161).

7. Dispositif de commande d'angle de rotation selon la revendication 1, comprenant en outre :
un manchon d'arbre (19) dont une extrémité vient en butée contre une extrémité de la seconde vis sans fin (18) et dont une autre extrémité comporte une cavité d'élimination de jeu (19a) ; et
un ressort d'élimination de jeu (20) qui est emmanché à l'intérieur de la cavité d'élimination de jeu (19a) ;
dans lequel le manchon d'arbre (19) est emmanché sur le mandrin (12) et est connecté au mandrin (12) par l'intermédiaire d'une boucle.

8. Dispositif de commande d'angle de rotation selon la revendication 7, dans lequel le manchon d'arbre (19) comprend en outre un cinquième trou traversant (28) qui communique avec la cavité d'élimination de jeu (19a), une paroi interne du cinquième trou traversant (28) comporte un bloc de fixation par serrage élastique (29) qui est étendu à l'intérieur de la cavité d'élimination de jeu (19a), un côté du bloc de fixation par serrage élastique (29) faisant face au cinquième trou traversant (28) comporte un biseau ou chanfrein de guidage (31), et le mandrin (12) comporte une fente de fixation par serrage (30) qui est engagée avec le bloc de fixation par serrage élastique (29).

9. Régleur automatique de jeu, comprenant :
un logement (1) qui comporte un premier trou traversant (2) et un deuxième trou traversant (3) qui communiquent l'un avec l'autre, et un trou de montage (10) qui est parallèle à un axe du premier trou traversant (2) et qui communique avec le premier trou traversant (2) et avec le deuxième trou traversant (3) ;
un engrenage sans fin (4) qui est disposé à l'intérieur du premier trou traversant (2) ;
une première vis sans fin (5) qui est disposée à l'intérieur du deuxième trou traversant (3) et qui est engagée avec l'engrenage sans fin (4) ;
un ressort hélicoïdal (6) qui est agencé au niveau d'une extrémité de la première vis sans fin (5) ;
un engrenage d'embrayage (7) qui est emmanché sur une autre extrémité de la première vis sans fin (5) ;
un assemblage de disque(s) de commande qui est agencé au niveau d'une extrémité du premier trou traversant (2) et qui comprend une bague d'engrenage ou couronne dentée (9) ; et
le dispositif de commande d'angle de rotation selon l'une quelconque des revendications 1 à 8, lequel est disposé à l'intérieur du trou de montage (10) ;
dans lequel l'engrenage de transmission (13) dans le dispositif de commande d'angle de rotation est engagé avec la bague d'engrenage ou couronne dentée (9), et la seconde vis sans fin (18) dans le dispositif de commande d'angle de rotation est engagée avec l'engrenage d'embrayage (7).

10. Régleur automatique de jeu selon la revendication 9, dans lequel l'assemblage de disque(s) de commande comprend en outre :
une plaque de recouvrement (22) qui recouvre un côté du premier trou traversant (2) suivant une direction axiale du premier trou traversant (2) et qui protège une ouverture du trou de montage (10) ; et
un bras de commande (8), dans lequel le bras de commande (8) et la bague d'engrenage ou couronne dentée (9) sont respectivement localisés sur les deux côtés de la plaque de recouvrement (22) et sont connectés de façon fixe à la bague d'engrenage ou couronne dentée (9) ; et
dans lequel le bras de commande (8) et la bague d'engrenage ou couronne dentée (9) peuvent être entraînés en rotation de façon synchrone par rapport à la plaque de recouvrement (22).

11. Régleur automatique de jeu selon la revendication 9, dans lequel le trou de montage (10) est un trou borgne, le dispositif de commande d'angle de rotation comprend en outre un manchon d'arbre (19) et un ressort d'élimination de jeu (20), et le manchon d'arbre (19) est emmanché sur la seconde vis sans fin (18) et est connecté au mandrin (12) par l'intermédiaire d'une boucle, dans lequel une extrémité du manchon d'arbre (19) vient en butée contre une extrémité de la seconde vis sans fin (18), et une autre extrémité du manchon d'arbre (19) comporte une cavité d'élimination de jeu (19a) ; et une extrémité du ressort d'élimination de jeu (20) vient en butée à l'intérieur de la cavité d'élimination de jeu (19a), et une autre extrémité du ressort d'élimination de jeu (20) vient en butée à l'intérieur du trou d'installation ou de montage (10).

12. Régleur automatique de jeu selon la revendication 9, comprenant en outre :
un élément de recouvrement supérieur (23) et un élément de recouvrement inférieur (24) qui sont respectivement agencés au niveau des deux extrémités du deuxième trou traversant (3) suivant une direction axiale.

13. Régleur automatique de jeu selon la revendication 9, dans lequel le logement comprend en outre un quatrième trou traversant qui communique avec le deuxième trou traversant (3), et le régleur automatique de jeu comprend en outre un éjecteur d'huile (25) à l'intérieur du quatrième trou traversant et un élément de recouvrement étanche à la poussière (26) qui recouvre l'éjecteur d'huile (25).

14. Frein d'automobile comprenant le régleur automatique de jeu selon l'une quelconque des revendications 9 à 13.
